Europäisches Patentamt

European Patent Office

Office européen des brevets

(19)

(11) **EP 1 192 067 B1**

(12)     **EUROPÄISCHE PATENTSCHRIFT**

(45) Veröffentlichungstag und Bekanntmachung des
Hinweises auf die Patenterteilung:
**03.05.2006 Patentblatt 2006/18**

(51) Int Cl.:
*B60T 7/04* *(2006.01)*     *B60T 13/74* *(2006.01)*
*B60T 7/12* *(2006.01)*     *B60T 7/10* *(2006.01)*

(21) Anmeldenummer: **00943755.9**

(22) Anmeldetag: **02.06.2000**

(86) Internationale Anmeldenummer:
**PCT/EP2000/005034**

(87) Internationale Veröffentlichungsnummer:
**WO 2000/076818 (21.12.2000 Gazette 2000/51)**

(54) **VORRICHTUNG SOWIE VERFAHREN FÜR DIE FAHRSITUATIONSABHÄNGIGE BETÄTIGUNG EINER BREMSANLAGE EINES KRAFTFAHRZEUGES**

DEVICE AND METHOD FOR ACTUATING A BRAKE SYSTEM OF A MOTOR VEHICLE ACCORDING TO DRIVING SITUATION

DISPOSITIF ET PROCEDE D'ACTIONNEMENT, EN FONCTION DE LA SITUATION DE CONDUITE, D'UN SYSTEME DE FREINAGE D'UN VEHICULE A MOTEUR

(84) Benannte Vertragsstaaten:
**DE FR IT**

(30) Priorität: **10.06.1999 DE 19926397**
**07.07.1999 DE 19931345**

(43) Veröffentlichungstag der Anmeldung:
**03.04.2002 Patentblatt 2002/14**

(73) Patentinhaber: **Continental Teves AG & Co. oHG**
**60488 Frankfurt (DE)**

(72) Erfinder: **DIEBOLD, Jürgen**
**D-65760 Eschborn (DE)**

(56) Entgegenhaltungen:
**DE-A- 19 510 796     DE-A- 19 751 659**
**DE-A- 19 831 541     DE-A- 19 901 581**

**Beschreibung**

Die vorliegende Erfindung bezieht sich auf eine Bremsanlage für Kraftfahrzeuge mit integrierter elektromechanischer Feststellbremsfunktion sowie einer implementierten Fahrerassistenzvorrichtung zur automatischen Umsetzung zumindest einer bremsenspezifischen Fahrerassistenzfunktion gemäß dem Oberbegriff des Patentanspruches 1. Ferner bezieht sich die vorliegende Erfindung auf ein Verfahren zur Steuerung einer solchen Bremsanlage.

Aus der Deutschen Patentschrift DE 39 09 907 C2 ist eine Bremsanlage für Kraftfahrzeuge mit Feststellbremse bekannt. Die Feststellbremse umfaßt zunächst einen vom Fahrer willkürlich betätigbaren Feststell- oder Bremshebel, der unabhängig von einem Antriebsaggregat eine Einwirkung auf ein Bremsseil zum Lösen bzw. Schließen der Radbremsen ermöglicht. Ferner weist die Feststellbremse eine Steuervorrichtung auf, die als Steuerelektronik ausgebildet ist und die eingangsseitig mit mindestens einem Drehzahlsensor zur Erfassung der Raddrehzahl, mit mindestens einem Drehrichtungssensor zur Erfassung der Drehrichtung eines Rades und mit einem Schalthebel-Stellungssensor zur Erfassung der für eine angewählte Getriebestufe eines Schaltgetriebes charakteristischen Schalthebelstellung verbunden ist. In Abhängigkeit von den durch die Steuerelektronik ausgewerteten Sensordaten kann die bekannte Feststellbremse daher auch ohne Zutun des Fahrers automatisch betätigt, d.h. gespannt oder gelöst werden, sobald sich das Fahrzeug in einer Park- oder Fahrsituation befindet, die ein Spannen bzw. Lösen der Feststellbremse erfordert.

Der Nachteil dieser bekannten Anordnung einer Feststellbremse besteht darin, daß lediglich eine unzureichende fahrsituationsabhängige Umsetzung eines Fahrerwunsches vorgesehen ist, da nur im Stillstand des Fahrzeuges bzw. bei sehr kleinen Geschwindigkeiten ein möglicher automatischer Bremseneingriff vorgesehen ist. Zudem reagiert die Feststellbremse bei manueller Betätigung durch den Fahrer lediglich in einer Betriebsart, bei der die Parameter des Fahrzustandes keinen wesentlichen Einfluß auf die tatsächliche Durchführung des Bremsvorganges haben.

Ebenso ist es aus der EP 0 825 081 A1 bekannt, mittels einer fremdkraftbetätigten Feststellbremsanlage eine automatische Anfahrhilfsfunktion umzusetzen. Dazu ist es generell erforderlich, zahlreiche den Fahrzustand des Fahrzeuges charakterisierende Eingangsdaten innerhalb einer Steuereinheit im Sinne von Auslösekriterien für die automatische Anfahrhilfefunktion auszuwerten und weiterzuverarbeiten. Parallel dazu werden entsprechende Eingangssignale der Steuereinheit zugeleitet, die den Fahrerwunsch hinsichtlich der Feststellbremsbetätigung charakterisieren. Dies erfordert einen äußerst komplexen Gesamtaufbau der Steuereinheit unter Verarbeitung großer Datenmengen.

Ausgehend davon besteht die Aufgabe der Erfindung darin, eine Bremsanlage mit integrierter, elektromechanischer Feststellbremsfunktion sowie automatischer bremsenspezifischer Fahrassistenzfunktion anzugeben, wobei die unterschiedlichen Bremsenanforderungen koordiniert sowie fahrsituationsabhängig umgesetzt sind.

Gelöst wird die Aufgabe durch eine Bremsanlage mit den Merkmalen des Patentanspruches 1. Eine solche Bremsanlage umfaßt eine elektromechanische Feststellbremsvorrichtung (EPB = elektrische Parkbremse), die ein Bedienelement zur Erfassung des Bremsbetätigungswunsches des Fahrers enthält. Weiterhin weist die Bremsanlage eine elektronische Fahrerassistenzvorrichtung zur automatischen Umsetzung zumindest einer bremsenspezifischen Fahrerassistenzfunktion (z. B. Anfahrhilfe, Hillholder, Ampelstop, Einparkunterstützung etc.) auf, die in der Lage ist im Sinne einer aktiven Parkbremse APB auf die Bremsanlage automatisch einzuwirken. Mittels einer elektronisch ansteuerbaren Aktuatoreinrichtung zur Betätigung zumindest einer Radbremse werden die Bremsfunktionen entsprechend innerhalb der Bremsanlage umgesetzt. Eine elektronische Steuereinrichtung zur Umwandlung von Eingangssignalen in entsprechende Ausgangssignale zur Ansteuerung der Aktuatoreinrichtung sorgen schließlich für das dosierte Zuspannen bzw. Lösen der Radbremsen. Die Eingangssignale weisen dabei den Betriebszustand des Kraftfahrzeuges bzw. den Zustand von Bedieneinrichtungen des Kraftfahrzeuges auf. Dadurch werden sowohl die aktuellen Fahrzeugdynamikdaten wie auch die durch den Zustand der Bedieneinrichtung (Fahr-, Brems-,Feststellbrems-, Kupplungs-, Getriebewählhebel bzw. -pedal etc.) definierten Bedienungsdaten der Steuereinrichtung zugeführt und von dieser verarbeitet. Die eigentliche Steuereinrichtung besitzt einen modularen Aufbau, wobei eigenständige Software-Module entstehen, die entsprechend zielgerichtet getrennt voneinander entwickelt werden können. Ein erstes Software-Modul (EPB-Modul) dient dabei der Umwandlung von Eingangssignalen in entsprechende Signale zur Umsetzung einer vom Fahrer veranlaßten Feststellbremsfunktion. Ein weiteres zweites Modul (APB-Modul) generiert aus den Eingangssignalen Signale zur Umsetzung der automatischen Fahrerassistenzfunktion, die innerhalb der Fahrerassistenzvorrichtung mit ihren spezifischen Randbedingungen innerhalb der Bremsanlage implementiert ist. Durch den modularen Aufbau der Softwarepakete innerhalb der Steuereinrichtung wird ein verbesserter und insbesondere schnellerer Datenfluß ermöglicht, der insgesamt die Leistungsfähigkeit der Steuereinrichtung steigert. Weiterhin ermöglicht der modulare Softwareaufbau eine zielgerichtete und anwendungsbezogene Gestaltung der einzelnen Module, die auf einfachem Wege in die Steuereinheit integriert werden können. Außerdem können zusätzliche Fahrerassistenzfunktionen mühelos durch einen ergänzenden Software-Baustein in das Gesamtsystem eingefügt werden. Auf diesem Wege können bereits mit einer elektrischen Feststellbremseinrichtung versehene Bremsanlagen um zusätzliche Fahrerassistenzfunktionen im Sinne einer aktiven Parkbremse APB ergänzt werden.

Durch den Aufbau der Steuereinrichtung mit einem ersten Modul zur Verarbeitung von im wesentlichen Eingangsdaten, welche den Bremsbetätigungswunsch des Fahrers erfassen, und einem zweiten Modul, welches Daten zur Umsetzung von automatischen sowie bremsenspezifischen Fahrerassistenzfunktionen verarbeitet, ist gemäß einer vorteilhaften Ausführung ein Koordinationsmodul vorgesehen, in dem die von den beiden Modulen gelieferten Signale zu resultierenden Signalen verarbeitet werden. Diese sind zur Ansteuerung einer mit den Radbremsen in Verbindung stehenden Aktuatoreinrichtung geeignet. Dem Koordinationsmodul kommt dabei die Aufgabe zu, aus den von den beiden vorgeschalteten Software-Modulen eingehenden Signalen Ausgangssignale zu generieren.

Ein für die Steuerung der genannten Bremsanlage geeignetes Verfahren wird in Anspruch 3 bis 6 sowie den Unteransprüchen erläutert. Generell werden dabei innerhalb der Steuereinrichtung aus den eingehenden Eingangssignalen resultierende Ausgangssignale erzeugt, die für die nachgeschaltete Aktuatoreinrichtung momentane Sollwerte für den zu erreichenden Betätigungskraft-Endwert $F_{res}$ und den dafür zu verwendenden Wert der Kraftänderung $\dot{F}_{res}$ (Zeitableitung des momentanen Kraft-IstWertes) repräsentieren. Anhand dieser Ausgangssignale $F_{res}$, $\dot{F}_{res}$ kann die Aktuatoreinrichtung anwendungsbezogen und fahrsituationsabhängig angesteuert werden. Als Eingangssignale für die Steuereinrichtung werden einerseits entsprechende Daten zum Fahrzustand des Kraftfahrzeuges erfaßt (Motormoment, Fahrzeuggeschwindigkeit, Zustand der Zündanlage, etc.) und andererseits werden Zustandsdaten der vom Fahrer betätigbaren Bedieneinrichtungen erfaßt, über die der Fahrer einen Einfluß auf den Betriebszustand des Kraftfahrzeuges nehmen kann (Fahr-, Brems-, Kupplungpedal, Feststellbrems-Schalter/-Hebel/-Pedal, Zündanlage, eingelegte Gangstufe etc.). Diese von der Steuereinrichtung erfaßten Eingangssignale werden entsprechend den beiden Software-Modulen (EPB-/APB-Modul) zugeleitet und von diesen verarbeitet. Dabei enthält das erste EPB-Modul ein Bedienkonzept zur fahrsituationsabhängigen Betätigung der Feststellbremse und berücksichtigt dabei neben Daten über den Betriebszustand des Fahrzeuges in erster Linie den Bremsbetätigungswunsch des Fahrers. Daraus werden im EPB-Modul Signale $F_{EPB}$ und $\dot{F}_{EPB}$ generiert, die grundsätzlich den Anweisungen für die Aktuatoreinrichtung entsprechen.

Parallel dazu werden die von der Steuereinrichtung empfangenen Eingangsdaten dem APB-Modul zugeführt, das im Sinne einer aktiven Parkbremse zusätzliche, automatische Fahrerassistenzsysteme wie Anfahrhilfe, Hillholder, Rangierhife/Einpark-unterstützung etc. umzusetzen vermag. Durch das APB-Modul werden zum ersten Modul analog entsprechende Anforderungssignale $F_{APB}$ und $\dot{F}_{APB}$ erzeugt. Die vom EPB- und vom APB-Modul gelieferten Daten werden einem Koordinationsmodul zugeführt, welches die entsprechenden Daten miteinander vergleicht und auswertet. Dabei werden vom Koordinationsmodul in Abhängigkeit von den Anforderungswerten $F_{EPB}$, $\dot{F}_{EPB}$, $F_{APB}$, $\dot{F}_{APB}$ resultierende Ausgangssignale $F_{res}$ und $\dot{F}_{res}$ erzeugt, die der Ansteuerung der nachgeschalteten Aktuatoreinrichtung dienen. Dabei muß die Koordinationseinheit insgesamt dafür Sorge tragen, daß zum einen der Bremsbetätigungswunsch des Fahrers vorrangig Berücksichtigung findet und zum anderen die Vorgabe erfüllt wird, den resultierenden Kraft-Endwert mit einer fahrzustandsabhängigen Dynamik zu erreichen.

Ein Ausführungsbeispiel der Erfindung wird anhand der Zeichnung dargestellt und im folgenden näher erläutert:

Es zeigt:

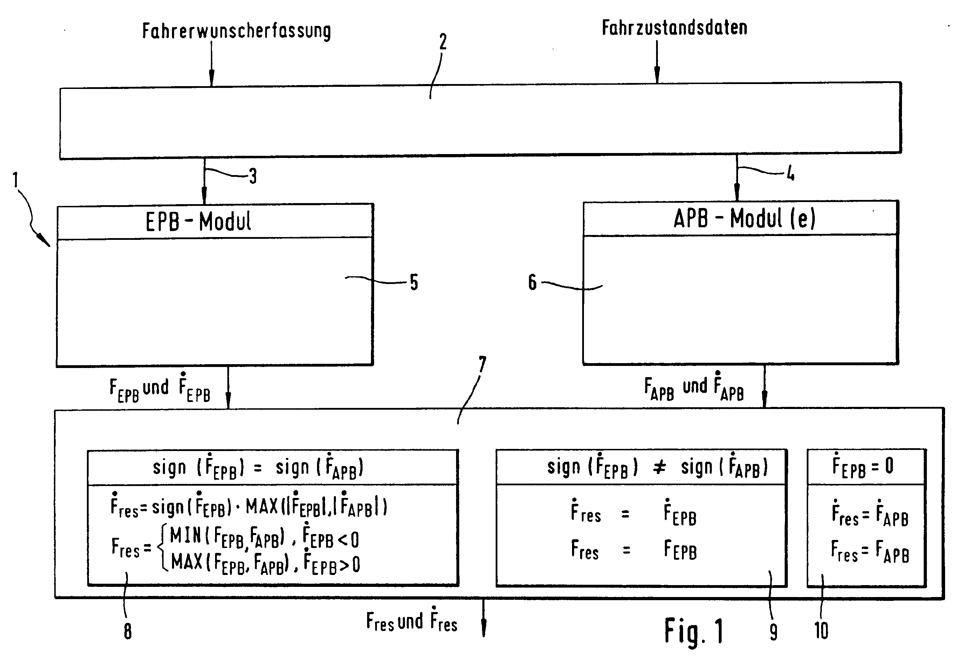

Fig. 1    ein schematisches Diagramm zum Ablauf des Steuerungsverfahrens innerhalb der Steuerungseinrichtung.

Figur 1 veranschaulicht in schematischer Darstellung den Aufbau einer elektronischen Steuereinrichtung 1 innerhalb einer gattungsgemäßen Bremsanlage. Allgemein besitzt die Bremsanlage eine elektromechanische Feststellbremsvorrichtung, die in der Lage ist, mittels eines Bedienelementes den Bremsbetätigungswunsch des Fahrers zu erfassen sowie die entsprechenden Betätigungsdaten der Steuereinrichtung 1 zuzuführen. Weiterhin umfaßt die Bremsanlage eine elektronische Fahrerassistenzvorrichtung zur automatischen Umsetzung zumindest einer bremsenspezifischen Fahrerassistenzfunktion in Abhängigkeit des Bewegungszustandes des Kraftfahrzeuges (z. B. Anfahrhilfe, Hillholder, Einparkhilfe etc.). Die elektronische Steuereinrichtung 1 ist hierbei dazu vorgesehen, anhand von Eingangsdaten über den Fahrzustand des Kraftfahrzeuges sowie Daten von vom Fahrer zu betätigenden Bedieneinrichtungen (Fahr-, Brems-, Kupplungpedal, Feststellbrems-Schalter/-Hebel/-Pedal, eingelegte Gangstufe etc.) entsprechende Ausgangssignale zu generieren, die zur Ansteuerung einer nachgeschalteten Aktuatoreinrichtung dienen. Die nicht gezeigte Aktuatoreinrichtung ist Bestandteil der Bremsanlage und bevorzugt elektromechanisch betätigbar ausgeführt. Derartige Aktuatoreinrichtungen können dabei durchaus unterschiedlich ausgebildet sein. Vorteilhafte Ausgestaltungen solcher Aktuatoreinrichtungen sind beispielsweise Zentralaktuatoren, die zentral auf mehrere Radbremsen einwirken können bzw. dezentrale Aktuatoren, die jeweils auf eine einzelne Radbremse einwirken. Dezentrale Aktuatoren können bevorzugt jeweils in die Radbremse integriert werden.

Die elektronische Steuereinrichtung 1 umfaßt zunächst eine Signalkonditionierungseinheit 2, die die Eingangsdaten zum Fahrzustand des Kraftfahrzeuges sowie zu den den Fahrerwunsch repräsentierenden Bedieneinrichtungen erfaßt und für die weitere Datenbearbeitung innerhalb der Steuereinrichtung aufbereitet. Innerhalb der Signalkonditionierungseinheit 2 wird somit der aktuell vorliegende Fahrzustand sowie die vom Fahrer gewünschte Beeinflussung des Fahrzustandes erkannt, wobei diese Zustände repräsentierende Daten über Signalpfade 3,4 den nachgeschalteten Software-Modulen zugeführt werden.

Als erstes ist ein EPB-Modul 5 vorgesehen, das in Form eines Software-Paketes ein Bedienkonzept zu einer vom Fahrer veranlaßten, fahrsituationsabhängigen Betätigung der Bremsanlage beinhaltet. Dabei wertet das EPB-Modul 5 das von einem zugeordneten Bedienelement gelieferte Signal fahrsituationsabhängig aus und liefert eine Betätigungs- /Löseanforderung ($F_{EPB}$, $\dot{F}_{EPB}$), die den bisher üblichen Bedienanforderungen einer mechanischen Feststellbremse entsprechen. Vornehmlich dient das EPB-Modul damit der Berücksichtigung sowie Umsetzung der vom Fahrer über das Bedienelement veranlaßten elektromechanischen Feststellbremsung.

Als zweites bzw. weiteres Software-Paket ist ein APB-Modul 6 in die Steuereinrichtung 1 integriert. Das APB-Modul ermöglicht im Sinne einer aktiven Parkbremse eine Erweiterung der Funktionalität der gesamten Bremsanlage mit elektromechanischer Feststellbremsvorrichtung. Es gestattet die zusätzliche Implementierung von Fahrerassistenzsystemen wie z.B. Anfahrhilfe, Hillholder, Rangierhilfe, Einparkunterstützung etc. Derartige Funktionalitäten erhöhen den Komfort sowie die Benutzerfreundlichkeit der gesamten Bremsanlage. Analog zum ersten Modul werden innerhalb des APB-Modules 6 entsprechende Anforderungssignale $F_{APB}$ und $\dot{F}_{APB}$ generiert, die den Anforderungsdaten für die Ansteuerung einer nachgeschalteten Aktuatoreinrichtung entsprechen. Im einzelnen wertet das APB-Modul 6 dabei entsprechend seiner Funktionalität (z. B. Anfahrhilfe) Fahrzeugsignale wie Fahr-, Brems-, Kupplungspedalbetätigungen, Motormomente, eingelegte Gangstufe, Fahrzeuggeschwindigkeit etc. aus und liefert ebenso eine Betätigungs-, Löseanforderung ($F_{APB}$, $\dot{F}_{APB}$), die der Funktionalität des Fahrerassistenzsystemes entspricht. Durch geeignete Gestaltung der einzelnen Software-Einheiten können somit beliebige Fahrerassistenzfunktionen in die Steuereinrichtung 1 integriert werden, wobei auch mehrere APB-Module 6 Verwendung finden können.

Zur Koordination der beiden von den getrennten Modulen 5,6 gelieferten Anforderungssignale $F_{EPB}$, $\dot{F}_{EPB}$, $F_{APB}$, $\dot{F}_{APB}$, die Sollwerte für die Betätigungskraft sowie die Betätigungskraftänderung der Aktuatoreinrichtung repräsentieren, werden diese Daten in einem Koordinationsmodul 7 weiterverarbeitet. Im Allgemeinen ist die Koordination der von den Einzel-Modulen 5,6 gelieferten Signale insbesondere dann von Bedeutung, wenn in einer Fahrsituation von beiden Modulen Anforderungssignale für die Ansteuerung einer Aktuatoreinrichtung geliefert werden.

Im wesentlichen sind zur Koordination der beiden Anforderungen des EPB-Modules 5 bzw. des APB-Modules 6 mehrere Betriebsfälle zu unterscheiden. In einem ersten Fall, d.h. bei gleichem Vorzeichen der beiden Anforderungssignale für die Änderung der Betätigungskraft $\dot{F}_{EPB}$ und $\dot{F}_{APB}$ liefern das EPB-Modul 5 sowie das APB-Modul 6 Betätigungs- bzw. Löseanforderungen, die in die gleiche Richtung zielen, d.h. beide fordern gleichzeitig ein Betätigen der Bremse oder beide fordern gleichzeitig ein Lösen der Bremse. Das Koordinationsmodül 7 muß daher demjenigen Software-Modul die höhere Priorität einräumen, das die höhere Dynamik anfordert bzw. die betragsmäßig größere Kraftänderung zur Erreichung des gemeinsamen Ziels der beiden Module 5,6 (nämlich Zuspannen oder Lösen) vorgibt. Bei verschiedenen Anforderungen $F_{EPB}$ und $F_{APB}$ für den Endwert der Betätigungskraft soll die jeweils weitergehende Forderung Berücksichtigung finden. D. h. beim 'Lösen' das Minimum und beim 'Zuspannen' das Maximum aus beiden Vorgaben. Anhand einer ersten Rechenanweisung 8 innerhalb des Koordinationsmodules 7 ergibt sich somit der folgende Algorithmus zur Bestimmung der resultierenden Ausgangssignale $F_{res}$ und $\dot{F}_{res}$ für den Fall sign ($\dot{F}_{EPB}$) = sign ($\dot{F}_{APB}$):

$$\dot{F}_{res} = sign(\dot{F}_{EPB}) \cdot Max\left(\left|\dot{F}_{EPB}\right|, \left|\dot{F}_{APB}\right|\right)$$

$$F_{res} = \begin{cases} Min(F_{EPB}, F_{APB}) & , \dot{F}_{EPB} < 0 \quad ;(L\ddot{o}sen) \\ Max(F_{EPB}, F_{APB}) & , \dot{F}_{EPB} > 0 ;(Zuspannen) \end{cases}$$

Entsprechend dieser ersten Rechenanweisung 8 wird ein sicherer fahrsituationsabhängiger Betrieb der Bremsanlage gewährleistet. Wird durch den Fahrer beispielsweise während der Fahrt eine elektromechanische Feststellbremsung über ein entsprechendes Bedienelement veranlaßt (Betätigung in Richtung Zuspannen), so geschieht dies mit einer langsamen Dynamik (im vergleich zu stillstehenden Fahrzeug). Betätigt ein Fahrer nun parallel dazu die Betriebsbremsanlage, so kann ein Hillholder bei erkanntem Stillstand des Fahrzeuges die elektromechanische Feststellbremse mit voller Dynamik zuspannen, da der Stillstand des Fahrzeuges bei betätigter Betriebsbremsanlage sicher erkannt wird. Die langsamere Anforderung aus dem EPB-Modul 6 wird dabei entsprechend obiger Rechenanweisung (Maximumbildung) ignoriert.

Wird als weiteres Beispiel die elektromechanische Feststellbremse vom APB-Modul 6 während eines Anfahrvorgangs langsam gelöst, kann der Fahrer durch Betätigen des Bedienelementes der Feststellbremsvorrichtung in Richtung Lösen den Lösevorgang beschleunigen. Der unmittelbaren Fahrerbedienung wird hier höhere Priorität eingeräumt.

Im zweiten Fall - bei gleichzeitiger Aktivität der beiden Module 5,6 - haben die Betätigungskraftänderungen $\dot{F}_{EPB}$ und $\dot{F}_{APB}$ unterschiedliches Vorzeichen. In dieser Situation liefern das EPB- und das APB-Modul 5,6 Betätigungs- bzw. Löseanforderungen, die in unterschiedliche Richtungen zielen, d.h. während eines der Module ein 'Zuspannen' anfordert, fordert das andere Modul parallel dazu ein 'Lösen' der Feststellbremse an. Das Koordinationsmodul 7 muß auch in diesem Fall dem Signal des EPB-Moduls 5 die höhere Priorität einräumen, da es in umittelbarem Zusammenhang mit einer Fahrerbedienung steht. Der Fahrer kann somit letztlich selbst durch entsprechenden Zugriff auf das Bedienelement der Feststellbremsvorrichtung den Fahrzustand des Kraftfahrzeuges beeinflussen.

Wird beispielsweise die elektromechanische Feststellbremse vom APB-Modul 6 während eines Anfahrvorganges langsam gelöst, kann der Fahrer durch Betätigung des Bedienelementes für die Feststellbremsvorrichtung in Richtung 'Zuspannen' den Lösevorgang der elektromechanischen Feststellbremse sowie den Anfahrvorgang des Fahrzeugs abbrechen und das Fahrzeug mit der elektromechansichen Feststellbremse wieder sicher parken. Die Fahrerbedienung genießt auch in diesem Fall die höchste Priorität.

Wird die elektrische Feststellbremsvorrichtung gemäß einem anderen Beispiel von einem Fahrerassistenzsystem (wie z. B. einem Hillholder) bei stillstehendem Fahrzeug und betätigter Betriebsbremsanlage zugespannt, so kann der Fahrer bei weiterhin betätigter Betriebsbremsanlage den Hillholder für diesen Fall durch Betätigung des Bedienelementes für die Feststellbremsvorrichtung in Richtung 'Lösen' deaktivieren. Falls der Fahrer bei weiterhin betätigter Betriebsbremsanlage doch die Anfahrhilfe wünscht, kann er durch erneutes Betätigen des Bedienelementes in Richtung 'Zuspannen' die elektromechanische Feststellbremse wieder betätigen und das Fahrerassistenzsystem ist wieder aktiviert. Damit ist die Bedienung des Fahrzeuges durch den Fahrer stets höher priorisiert als die Anforderungen des komfortorientierten und automatischen APB-Modules 6. Bei unterschiedlichen Vorzeichen der Betätigungskraftänderungen, d.h. sign($\dot{F}_{EPB}$) ≠ sign ($\dot{F}_{APB}$) findet daher zur Bestimmung der resultierenden Ausgangssignale $F_{res}$ und $\dot{F}_{res}$ für die Ansteuerung der Aktuatoreinrichtng ein Algorithmus mit einer zweiten Rechenanweisung 9:

$$\dot{F}_{res} = \dot{F}_{EPB}$$

$$F_{res} = F_{EPB}$$

Verwendung.

Bei Ausbleiben einer Betätigung des Bedienelementes für die Feststellbremsvorrichtung durch den Fahrer ändert sich gemäß einem dritten Anwendungsfall der Betätigungs-Zustand innerhalb des EPB-Modules nicht, d. h. $\dot{F}_{EPB}$ = 0. Für diesen Fall wird aufgrund der fehlenden direkten Einflußnahme des Fahrers auf den Zustand der Feststellbremsvorrichtung den Signalen des APB-Modules durch das Koordinationsmodul höhere Priorität bei der Ansteuerung der Aktuatoreinrichtung eingeräumt. Die resultierenden Ansteuersignale $F_{res}$ und $\dot{F}_{res}$ entsprechen somit den Ausgangssignalen $F_{APB}$ und $\dot{F}_{APB}$ des APB-Modules. Für den Fall $\dot{F}_{EPB}$ = 0 wird zur Bestimmung der Ausgangssignale $F_{res}$ und $\dot{F}_{res}$ für die Ansteuerung der Aktuatoreinrichtng innerhalb des Koordinationsmodules 7 von einem Algorithmus mit einer dritten Rechenanweisung 10:

$$\dot{F}_{res} = \dot{F}_{APB}$$

$$F_{res} = F_{APB}$$

Gebrauch gemacht.

Durch eine derartige Gestaltung der Steuereinrichtung mit zugehörigem Verfahren zur Steuerung der Bremsanlagen kann die Steuereinrichtung 1 mit ihren Softwarebestandteilen entsprechend modular aufgebaut werden. Dies gestattet den zielgerichteten Entwurf der einzelnen Software-Module, die lediglich hinsichtlich ihres Zusammenspieles in die Steuereinrichtung 1 implementiert werden müssen. Außerdem eröffnet sich die Möglichkeit, bereits bekannte, vorhandene EPB-Module 5 unverändert auch für Fahrzeuge mit erweiterter Funktionalität zu verwenden. Zusätzliche Fahrerassistenzfunktionen können somit auf einfachem Wege nachgerüstet werden.

**Patentansprüche**

1. Bremsanlage für Kraftfahrzeuge mit

   - einer elektromechanischen Feststellbremsvorrichtung, die ein Bedienelement zur Erfassung des Bremsbetätigungswunsches des Fahrers umfaßt,
   - einer elektronischen Fahrerassistenzvorrichtung zur automatischen Umsetzung zumindest einer bremsenspezifischen Fahrerassistenzfunktion,
   - einer elektronisch ansteuerbaren Aktuatoreinrichtung zur Betätigung zumindest einer Radbremse und
   - einer elektronischen Steuereinrichtung (1) zur Umwandlung von Eingangssignalen in entsprechende Ausgangssignale zur Ansteuerung der Aktuatoreinrichtung, wobei die Eingangssignale den Betriebszustand des Kraftfahrzeuges bzw. Zustandsdaten von Bedieneinrichtungen repräsentieren,

   **dadurch gekennzeichnet, daß** die Steuereinrichtung (1) ein erstes Modul (5) zur Umwandlung von Eingangssignalen in Signale ($F_{EPB}$, $\dot{F}_{EPB}$) zur Umsetzung einer vom Fahrer veranlaßten Feststellbremsfunktion sowie ein zweites Modul (6) zur Umwandlung der Eingangssignale in Signale ($F_{APB}$, $\dot{F}_{APB}$) zur Umsetzung der automatischen Fahrerassistenzfunktion aufweist.

2. Bremsanlage nach Anspruch 1, **dadurch gekennzeichnet, daß** die Steuereinrichtung (1) ein Koordinationsmodul (7) zur Erzeugung resultierender Ausgangssignale ($F_{res}$, $\dot{F}_{res}$) aus den vom ersten (5) und vom zweiten Modul (6) gelieferten Signalen zur Ansteuerung der Aktuatoreinrichtung aufweist.

3. Verfahren zur Steuerung einer Bremsanlage nach einem der vorhergehenden Ansprüche, **dadurch gekennzeichnet, daß** die Steuereinrichtung (1) als Ausgangssignale die resultierende Betätigungskraft $F_{res}$ und die resultierende Betätigungskraftänderung $\dot{F}_{res}$ ausgibt, die Soll-Vorgaben für den von der Aktuatoreinrichtung auszuübenden Endwert der Zuspannkraft und die im Übergang dorthin bevorzugt zu verwendende Kraftänderung sind.

4. Verfahren zur Steuerung einer Bremsanlage nach einem der vorhergehenden Ansprüche 1 oder 2, **dadurch gekennzeichnet, daß** das erste Modul (5) als Signale die für die Umsetzung der vom Fahrer veranlaßten Feststellbremsfunktion erforderliche Betätigungskraft $F_{EPB}$ und Betätigungskraftänderung $\dot{F}_{EPB}$ generiert.

5. Verfahren zur Steuerung einer Bremsanlage nach einem der vorhergehenden Ansprüche 1 oder 2, **dadurch gekennzeichnet, daß** das zweite Modul (6) als Signale die für die Umsetzung der automatischen Fahrerassistenzfunktion erforderliche Betätigungskraft $F_{APB}$ sowie die Betätigungskraftänderung $\dot{F}_{APB}$ generiert.

6. Verfahren zur Steuerung einer Bremsanlage nach Anspruch 2, **dadurch gekennzeichnet, daß** das Koordinationsmodul (7) die vom ersten (5) bzw. zweiten Modul (6) generierten Betätigungskraftänderungen $\dot{F}_{EPB}$, $\dot{F}_{APB}$ vergleicht und in Abhängigkeit vom Vorzeichen der Betätigungskraftänderungen $\dot{F}_{EPB}$, $\dot{F}_{APB}$ entweder die Signale des ersten oder die Signale des zweiten Modules als Ausgangssignale zur Ansteuerung der Aktuatoreinrichtung priorisiert.

7. Verfahren nach Anspruch 6, **dadurch gekennzeichnet, daß** bei unterschiedlichen Vorzeichen der Betätigungskraftänderungen $\dot{F}_{EPB}$, $\dot{F}_{APB}$ den Signalen des ersten Modules (5) durch das Koordinationsmodul (7) höhere Priorität eingeräumt wird.

8. Verfahren nach Anspruch 7, **dadurch gekennzeichnet, daß** als resultierende Betätigungskraft $F_{res}$ der vom ersten Modul (5) angeforderte Wert $F_{EPB}$ Verwendung findet.

9. Verfahren nach Anspruch 6, **dadurch gekennzeichnet, daß** bei gleichem Vorzeichen der beiden generierten Betätigungskraftänderungen $\dot{F}_{EPB}$, $\dot{F}_{APB}$ den Signalen des Modules mit höherer Dynamik hinsichtlich der Umsetzung der Bremsfunktion höhere Priorität durch das Koordinationsmodul (7) eingeräumt wird.

10. Verfahren nach Anspruch 9, **dadurch gekennzeichnet, daß** als Endwert $F_{res}$ für die Betätigungskraft bei negativem $\dot{F}_{EPB}$ das Minimum und bei positivem $\dot{F}_{EPB}$ das Maximum der Signale $F_{EPB}$ und $F_{APB}$ Verwendung findet.

**Claims**

1. Brake system for motor vehicles with

- an electromechanical parking brake device comprising an operating element for detecting the driver's request for brake actuation,
- an electronic driver assistance device for the automatic execution of at least one brake-specific driver assistance function,
- an electronically actuatable actuator device for the actuation of at least one wheel brake, and
- an electronic control device (1) for the conversion of input signals into corresponding output signals for driving the actuator device, wherein the input signals represent the operating condition of the motor vehicle or condition data of operating devices, respectively,

**characterized in that** the control device (1) includes a first module (5) for the conversion of input signals into signals ($F_{EPB}$, $\dot{F}_{EPB}$) for the execution of a parking brake function induced by the driver, and a second module (6) for the conversion of the input signals into signals ($F_{APB}$, $\dot{F}_{APB}$) for the execution of the automatic driver assistance function.

2. Brake system as claimed in claim 1,
   **characterized in that** the control device (1) includes a coordination module (7) for producing resulting output signals ($F_{res}$, $\dot{F}_{res}$) out of the signals supplied from the first (5) and the second module (6) for driving the actuator device.

3. Method of controlling a brake system as claimed in any one of the preceding claims,
   **characterized in that** the control device (1) outputs as output signals the resulting actuating force $F_{res}$ and the resulting actuating force variation $\dot{F}_{res}$, which are preset values for the end value of the tensioning force to be exerted by the actuator device and for the force variation which is preferred to be used until the end value is reached.

4. Method of controlling a brake system as claimed in any one of the preceding claims 1 or 2,
   **characterized in that** the first module (5) generates as signals the actuating force $F_{EPB}$ and actuating force variation $\dot{F}_{EPB}$ necessary for the execution of the parking brake function induced by the driver.

5. Method of controlling a brake system as claimed in any one of the preceding claims 1 or 2,
   **characterized in that** the second module (6) generates as signals the actuating force $F_{APB}$ and the actuating force variation $\dot{F}_{APB}$ necessary for the execution of the automatic driver assistance function.

6. Method of controlling a brake system as claimed in claim 2,
   **characterized in that** the coordination module (7) compares the actuating force variations $\dot{F}_{EPB}$, $\dot{F}_{APB}$ generated by the first (5) or second module (6) and, in dependence on the sign of the actuating force variations $\dot{F}_{EPB}$, $\dot{F}_{APB}$, prioritizes either the signals of the first or the signals of the second module as output signals for the actuation of the actuator device.

7. Method as claimed in claim 6,
   **characterized in that** with different signs of the actuating force variations $\dot{F}_{EPB}$, $\dot{F}_{APB}$, the coordination module (7) gives higher priority to the signals of the first module (5).

8. Method as claimed in claim 7,
   **characterized in that** the value $F_{EPB}$ demanded by the first module (5) is used as resulting actuating force $F_{res}$.

9. Method as claimed in claim 6,
   **characterized in that** with like signs of the two generated actuating force variations $\dot{F}_{EPB}$, $\dot{F}_{APB}$, the coordination module (7) gives higher priority to the signals of the module with greater dynamics with respect to the execution of the brake function.

10. Method as claimed in claim 9,
    **caracterized in that** with negative $\dot{F}_{EPB}$ the minimum and with positive $\dot{F}_{EPB}$ the maximum of the signals $F_{EPB}$ and $F_{APB}$ is used as end value $F_{res}$ for the actuating force.

**Revendications**

1. Système de freinage pour véhicule automobile comportant

   - un dispositif électromécanique de blocage frein qui comprend un élément de commande pour enregistrer le souhait du conducteur d'actionner le frein,

- un dispositif électronique d'assistance du conducteur pour la réalisation automatique d'au moins une fonction d'assistance du conducteur spécifique du freinage,

- un dispositif actionneur, à commande électronique, pour actionner au moins un frein de roue et

- un dispositif électronique de commande (1) pour la conversion de signaux d'entrée en signaux de sortie correspondants, afin de commander le dispositif actionneur, les signaux d'entrée représentant l'état de fonctionnement du véhicule automobile ou des données d'état de dispositifs de commande,

**caractérisé en ce que** le dispositif de commande (1) comporte un premier module (5)pour la conversion de signaux d'entrée en signaux ($F_{EPB}$, $F_{EPB}$) pour la réalisation d'une fonction de blocage de frein, provoquée par le conducteur, ainsi qu'un deuxième module (6) pour la conversion des signaux d'entrée en signaux $F_{APB}$, $F_{APB}$ pour la réalisation de la fonction automatique d'assistance du conducteur.

**2.** Système de freinage selon la revendication 1, **caractérisé en ce que** le dispositif de commande (1) comporte un module de coordination (7) pour produire des signaux de sortie $F_{res}$, $F_{res}$ résultants à partir des signaux fournis par le premier module (5) et le deuxième module (6), afin de commander le dispositif actionneur.

**3.** Procédé de commande d'un système de freinage selon l'une des revendications précédentes, **caractérisé en ce que** le dispositif de commande (1) délivre comme signaux de sortie la force d'actionnement résultante $F_{res}$ et la variation de la force d'actionnement résultante $F_{res}$, qui constitue des consignes pour la valeur finale de la force de serrage, à exercer par le dispositif actionneur, et la variation de la force à utiliser de préférence au cours de la transition vers celle-ci.

**4.** Procédé de commande d'un système de freinage selon l'une des revendications 1 ou 2 précédentes, **caractérisé en ce que** le premier module (5) génère, comme signaux, la force d'actionnement $F_{EPB}$ nécessaire à la réalisation de la fonction de blocage de frein provoquée par le conducteur, ainsi que la variation de la force d'actionnement $F_{EPB}$.

**5.** Procédé de commande d'un système de freinage selon l'une des revendications 1 ou 2 précédentes, **caractérisé en ce que** le deuxième module (6) génère, comme signaux, la force d'actionnement $F_{APB}$ nécessaire à la réalisation de la fonction automatique d'assistance du conducteur, ainsi que la variation de la force d'actionnement $F_{APB}$.

**6.** Procédé de commande d'un système de freinage selon la revendication 2, **caractérisé en ce que** le module de coordination (7) compare les variations de la force d'actionnement $F_{EPB}$, $F_{APB}$ générée par le premier module (5) ou le deuxième module (6), et donne la priorité, en fonction du signe des variations de la force d'actionnement $F_{EPB}$, $F_{APB}$, soit aux signaux du premier module, soit aux signaux du deuxième module, comme signaux de sortie pour commander le dispositif actionneur.

**7.** Procédé selon la revendication 6, **caractérisé en ce que**, dans le cas de signes différents des variations de la force d'actionnement $F_{EPB}$, $F_{APB}$, le module de coordination (7) accorde une plus grande priorité aux signaux du premier module (5).

**8.** Procédé selon la revendication 7, **caractérisé en ce qu'**on utilise comme force d'actionnement résultante $F_{res}$ la valeur $F_{EPB}$ demandée par le premier module (5).

**9.** Procédé selon la revendication 6, **caractérisé en ce que** dans le cas où les deux variations de la force d'actionnement $F_{EPB}$, $F_{APB}$ générée présentent le même signe, le module de coordination (7) accorde aux signaux du module de dynamique plus élevée une plus grande priorité en ce qui concerne la réalisation de la fonction de freinage.

**10.** Procédé selon la revendication 9, **caractérisé en ce qu'**on utilise comme valeur finale $F_{res}$ pour la force d'actionnement, dans le cas où $F_{EPB}$ est négatif, le minimum, et dans le cas où $F_{EPB}$ est positif, le maximum des signaux $F_{EPB}$ et $F_{APB}$.

EP 1 192 067 B1

Fahrerwunscherfassung

Fahrzustandsdaten

2

3

4

1

EPB – Modul

5

APB – Modul (e)

6

$F_{EPB}$ und $\dot{F}_{EPB}$

7

$F_{APB}$ und $\dot{F}_{APB}$

| $\text{sign}(\dot{F}_{EPB}) = \text{sign}(\dot{F}_{APB})$ |
|---|
| $\dot{F}_{res} = \text{sign}(\dot{F}_{EPB}) \cdot \text{MAX}(|\dot{F}_{EPB}|, |\dot{F}_{APB}|)$ |
| $F_{res} = \begin{cases} \text{MIN}(F_{EPB}, F_{APB}), & \dot{F}_{EPB} < 0 \\ \text{MAX}(F_{EPB}, F_{APB}), & \dot{F}_{EPB} > 0 \end{cases}$ |

8

| $\text{sign}(\dot{F}_{EPB}) \neq \text{sign}(\dot{F}_{APB})$ |
|---|
| $\dot{F}_{res} = \dot{F}_{EPB}$ |
| $F_{res} = F_{EPB}$ |

9

| $\dot{F}_{EPB} = 0$ |
|---|
| $\dot{F}_{res} = \dot{F}_{APB}$ |
| $F_{res} = F_{APB}$ |

10

$F_{res}$ und $\dot{F}_{res}$

Fig. 1